# EUROPÄISCHE PATENTSCHRIFT

(11) **EP 2 728 233 B1**
(45) Veröffentlichungstag und Bekanntmachung des Hinweises auf die Patenterteilung: **24.08.2016**
(21) Anmeldenummer: 13189878.5
(22) Anmeldetag: 23.10.2013
(51) Int. Cl.: F16L 11/16, F16L 11/26, F16L 59/153, F01N 13/18, F01N 13/10

(54) **Flexibles Leitungselement**
Flexible conduit element
Elément de conduite flexible

(30) Priorität: 06.11.2012 DE 102012220175
(43) Veröffentlichungstag der Anmeldung: 07.05.2014
(73) Patentinhaber: Witzenmann GmbH, 75175 Pforzheim (DE)
(72) Erfinder: Fochtner, Armin, 75417 Mühlacker (DE); Pluschke, Michael, 75305 Neuenbürg (DE); Matthies, Jens-Uwe, 76135 Karlsruhe (DE)
(74) Vertreter: Lemcke, Brommer & Partner Patentanwälte Partnerschaft mbB

(56) Entgegenhaltungen:
- DE-A1- 10 340 983
- DE-A1-102010 061 544
- US-A- 2 874 722
- US-A- 3 204 666
- US-A- 5 669 420
- US-A1- 2001 048 989
- US-A1- 2011 036 441

## Beschreibung

Die Erfindung betrifft ein flexibles Leitungselement, insbesondere einen Wickelschlauch, zur Verwendung in einer Abgasanlage eines Kraftfahrzeugs.

Wickelschläuche werden aus einem profilierten Metallband hergestellt, das ineinander verhakt wendelförmig aufgewickelt wird. Typische Formen der Verbindung sind gehakte Profile und gefalzte Profile (Agraff-Profil).

Wickelschläuche kommen häufig als flexibles, temperatur- und alterungsbeständiges Element in der Abgastechnik, beispielsweise als Schutzschlauch für einen Metallbalg oder als Liner in Entkopplungselementen, als Umhüllung für elektrische Leitungen/Lichtleiter und als Absaug- und Förderschlauch zum Einsatz.

Ein metallischer Wickelschlauch ist beispielsweise aus DE 203 02 657 U1 bekannt, dessen Profil aus einem inneren axialen Abschnitt, einem äußeren axialen Abschnitt, einem die axialen Abschnitte verbindenden radialen Abschnitt, sowie je einer von den axialen Abschnitten abgebogenen Profilkante gebildet ist, welche radial verläuft, so dass sich insgesamt ein S-förmiger Profilquerschnitt ergibt. Der Wickelschlauch ist von einem Metallbalg umgeben.

Üblicherweise ist bei derartigen aus dem Stand der Technik bekannten Wickelschläuchen zwischen dem Wickelschlauch und dem umgebenden Metallbalg ein Luftspalt vorgesehen, um eine gewisse thermische und akustische Isolation zu erreichen. Dies kann durch bestimmte Bauformen, wie beispielsweise heruntergezogene Borde, zusätzlich verstärkt werden.

Die DE 103 40 983 A1 offenbart einen Wickelschlauch, der von einem Metallbalg umgeben ist, wobei zwischen Balg und Wickelschlauch in Abstandhalter aus einem Gewebe, Gestricke, Geflecht oder Vlies angeordnet ist.

Um Wärmeverlusten aus dem Abgasstrang vorzubeugen, gewinnt das Thema Isolierung, insbesondere wenn der Wickelschlauch in einem Entkopplungselement einer Abgasanlage eingesetzt wird, aufgrund der immer schärferen Abgasgesetzgebung bzw. damit einhergehender technischer Anforderungen zunehmend an Bedeutung.

Jedoch unterliegen insbesondere Wickelschläuche, insbesondere solche, die in Entkopplungselementen eingesetzt werden, aufgrund der Reibung zwischen dem bewegten flexiblen Teil und einer mehr oder weniger starren aufgebrachten Isolierung relativ starkem Verschleiß.

Daher ist es eine Aufgabe der vorliegenden Erfindung, ein flexibles Leitungselement, insbesondere einen Wickelschlauch zur Verwendung in einer Kraftfahrzeugabgasanlage, bereitzustellen, durch das eine verbesserte Isolierung auf konstruktiv einfache Art und Weise und bei nur geringem Verschleiß realisiert werden kann.

Die Aufgabe der Erfindung wird durch ein flexibles Leitungselement mit den Merkmalen gemäß Anspruch 1 gelöst. Vorteilhafte Weiterbildungen der Erfindung sind in den abhängigen Ansprüchen definiert.

Erfindungsgemäß bereitgestellt wird ein flexibles Leitungselement in Form eines Wickelschlauchs zur Verwendung in einer Abgasanlage eines Kraftfahrzeugs, welches ein mehrlagiges Profil aufweist, wobei jede Lage des Profils eine jeweilige vorbestimmte Dicke aufweist, wobei das Profil zumindest einen inneren axialen Abschnitt, zumindest einen äußeren axialen Abschnitt, der den inneren axialen Abschnitt zumindest teilweise überlappt, und zumindest einen den inneren axialen Abschnitt und den äußeren axialen Abschnitt verbindenden radialen Abschnitt aufweist, wobei der äußere axiale Abschnitt, der radiale Abschnitt, der innere axiale Abschnitt und ein sich anschließender weiterer radialer Abschnitt eine Kammer bilden, deren radiale lichte Abmessung im Wesentlichen eine radiale Profilhöhe des Profils bestimmt, und wobei die radiale Profilhöhe zumindest doppelt so groß ist wie die Summe der jeweiligen vorbestimmten Materialdicken der Lagen des Profils. Dabei sind die radialen Abschnitte der Kammer länger als der jeweilige innere axiale und äußere axiale Abschnitt ausgebildet. So entsteht eine im Wesentlichen rechteckige Form, die besonders flexibel ist und jegliche Bewegungen des Wickelschlauchs aufnimmt, ohne dabei Schaden zu nehmen. Darüber hinaus ist diese Ausführung auch in mechanischer Hinsicht gegenüber äußeren Belastungen besonders stabil.

Im Stand der Technik sind die sogenannten Agraffen, die die Profilhöhe des Wickelschlauchs ausmachen, üblicherweise niedrig ausgeformt, so dass die Profilhöhe etwa der Summe der Materialdicken der Profillagen entspricht. Durch die erfindungsgemäße Konfiguration wird die Profilhöhe deutlich vergrößert, so dass zwischen dem äußeren axialen Abschnitt und dem inneren axialen Abschnitt ein weiterer Abstand entsteht, der einen Raum definiert, welcher ein Isoliermittel, wie beispielsweise Luft oder einen Feststoff, aufnehmen kann. Beispielsweise bewirkt schon ein solcher vergrößerter Luftspalt von wenigen Millimetern einen deutlich positiven Effekt hinsichtlich der Isolierung. Durch die Vergrößerung des Abstands zwischen dem inneren und äußeren axialen Abschnitt und der Ausbildung des genannten, vorzugsweise rechteckigen Raums dazwischen wird somit auf kostengünstige, flexible und verschleißfreie bzw. zumindest verschleißarme Weise eine thermische und akustische Isolierung erzeugt.

Gemäß einer bevorzugten Ausführungsform beträgt die radiale Profilhöhe zumindest 5 mm, wohingegen die aus dem Stand der Technik bekannten Profilhöhen üblicherweise lediglich etwa 2 mm betragen. Die hohe Profilausführung bewirkt auf konstruktiv einfache Weise eine effektive Verbesserung der Isolierung. Auch ein unerwünschter Wärmeverlust aus dem Wickelschlauch kann hierdurch verringert werden.

Gemäß noch einer weiteren bevorzugten Ausführungsform ist im Inneren des Profils, insbesondere im Inneren der Kammern, ein Isoliermittel vorgesehen. Das Vorsehen des Isoliermittels im Inneren der Kammern erfordert wenig bzw. keinen zusätzlichen Bauraum, verbessert aber die thermische und/oder akustische Isolierwirkung nochmals beträchtlich.

Vorzugsweise ist das Isoliermittel ein poröses, höchst vorzugsweise nicht verformbares Material. Das Isoliermittel kann ein Glasfasermaterial, insbesondere Glasfasergestrick, umfassen oder allein durch Luft gebildet sein. Eine Feststoffisolierung erhöht die Isolationswirkung noch weiter. Luft dagegen ist eine besonders kostengünstige Variante. Vorzugsweise ist das Isoliermittel gegenüber einer Wärmeeinwirkung bei Abgasanwendungen ausreichend hitzebeständig.

Darüber hinaus ist es vorteilhaft, wenn das Profil aus einem metallischen Material gebildet ist, vorzugsweise Stahl oder Edelstahl, welches zusätzlich zumindest abschnittweise mit einem definierten Lochmuster versehen sein kann. Durch letztes Merkmal kann eine effektive Schalldämpfung realisiert werden, da eine Art Helmholtz-Reflektor ausgebildet werden kann, welcher physikalisch als Schalldämpfer wirkt.

Gemäß einer weiteren bevorzugten Ausführungsform ist das flexible Leitungselement als Innenkomponente oder Außenkomponente eines weiteren flexiblen Leitungselements, insbesondere eines Metallbalgs, verwendbar.

Alternativ kann das flexible Leitungselement auch als direkt oder indirekt abgasführendes Bauteil verwendet werden.

Um insbesondere bei mit Isolierstoff gefüllten Ausgestaltungen des erfindungsgemäßen flexiblen Leitungselements den Isolierstoff in der Kammer definiert zu halten und/oder um zusätzlich ein erhöhtes Maß an Dämpfung bereitzustellen, sieht eine andere Weiterbildung des erfindungsgemäßen flexiblen Leitungselements vor, dass ein radial äußerer axialer Abschnitt und/oder ein radial innerer axialer Abschnitt des Profils gekrümmt ausgebildet ist, vorzugsweise bezüglich der Kammer konkav gekrümmt.

Um das Volumen in der Kammer zumindest in axialer Richtung auch bei einem Zusammenschieben des flexiblen Leitungselements definiert zu erhalten, sieht eine wieder andere Weiterbildung der Erfindung vor, dass axial aufeinanderfolgende innere und äußere Abschnitte des flexiblen Leitungselements, bzw. des Profils axial unterschiedlich lang ausgebildet sind. Dies führt beim Einsatz des flexiblen Leitungselements dazu, dass die axiale Richtung eine lichte Breite des Kammervolumens verbleibt, welche zumindest einer entsprechenden Abmessung des kürzeren inneren oder äußeren axialen Abschnitts entspricht. Anders ausgedrückt: bei der vorstehend beschriebenen Weiterbildung des beschriebenen Leitungselements lässt sich die Kammer in axialer Richtung nur bis auf das Maß der axialen Erstreckung des jeweils kürzeren der genannten inneren und äußeren axialen Abschnitte zusammenschieben, so dass immer ein lichtes Kammervolumen verbleibt, in dem beispielsweise ein festes Isoliermittel angeordnet sein kann.

Eine wieder andere Weiterbildung des erfindungsgemäßen flexiblen Leitungselements sieht vor, dass axial aufeinanderfolgende radiale Abschnitte im Wesentlichen gleich lang und/oder damit deutlich unterschiedlicher Länge ausgebildet sein können. Auf diese Weise lassen sich im Rahmen der vorliegenden Erfindung alternative Profilformen realisieren, welche für bestimmte Anwendungsfälle besonders günstige Eigenschaften aufweisen können.

Weitere Merkmale und Vorteile der vorliegenden Erfindung ergeben sich aus der nachfolgenden Beschreibung von Ausführungsbeispielen anhand der Zeichnung.
- Fig. 1A, 1B: zeigen Schnitte durch ein schematisch dargestelltes Profil eines Wickelschlauchs gemäß dem Stand der Technik;
- Fig. 2: zeigt ein schematisch dargestelltes Profil eines Wickelschlauchs gemäß einer Ausführungsform;
- Fig. 3: zeigt ein schematisch dargestelltes Profil eines Wickelschlauchs gemäß einer weiteren Ausführungsform;
- Fig. 4A, 4B: zeigen ein schematisch dargestelltes Profil eines Wickelschlauchs gemäß noch einer weiteren Ausführungsform mit und ohne Isoliermittel; und
- Fig. 5A, 5B: zeigen ein schematisch dargestelltes Profil eines Wickelschlauchs gemäß noch einer weiteren Ausführungsform mit und ohne Isoliermittel.

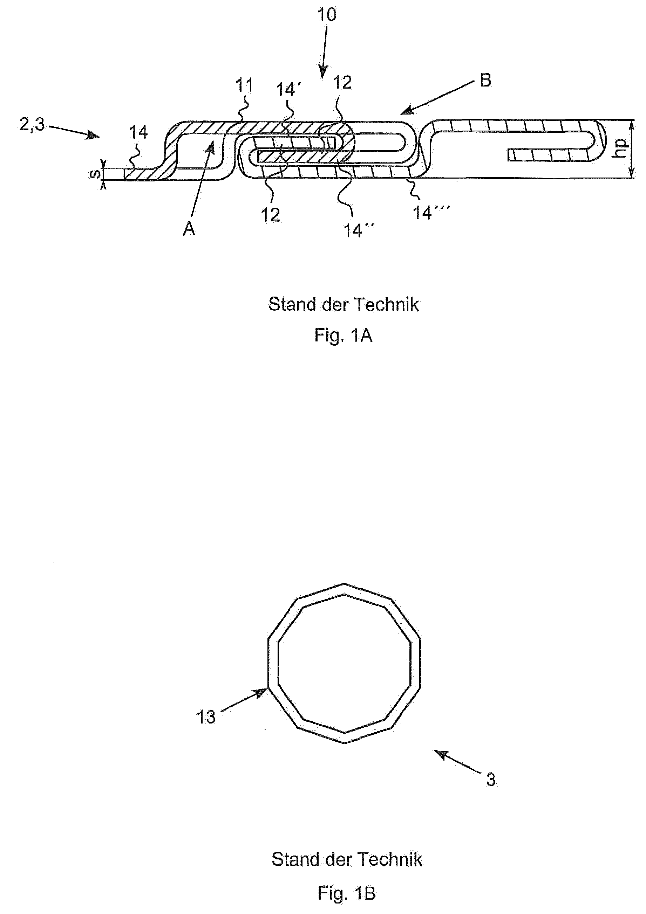

Fig. 1A und 1B zeigen Schnitte durch ein schematisch dargestelltes Profil 10 eines Wickelschlauchs 3 gemäß einer Ausführungsform des Standes der Technik, wobei Fig. 1A einen Längsschnitt und Fig. 1B einen Querschnitt durch den Wickelschlauch 3 zeigt, welcher gemäß Figur 1b über seinen Umfang mit zehn Kanten 13 versehen ist. Der Wickelschlauch 3 ist aus einem Metallband in Form eines gefalzten Agraffprofils hergestellt, dessen Agraffen 11 niedrig ausgeformt sind. Die Seitenränder des Metallbands sind dabei mit jeweiligen Haken 12 versehen, die ineinandergreifen. In der Figur ist die Profilhöhe des Profils 10 mit hp gekennzeichnet. Sie beträgt in der hier dargestellten Ausführungsform etwa 1,75 mm und ergibt sich aus der aufsummierten Materialdicke s bzw. der aufsummierten Wanddicke der einzelnen Profillagen 14, 14', 14", 14"'.

In Figur 1A sind zwei verschiedene Zustände des flexiblen Leitungselements 2 bzw. des Wickelschlauchs 3 dargestellt, nämlich ein auseinander gezogener Zustand, welcher bei Bezugszeichen A mit relativ enger Schraffur dargestellt ist, sowie ein zusammengeschobener Zustand, welcher bei Bezugszeichen B ohne Schraffur dargestellt ist. In jedem Fall ergibt sich für das Profil 10 die bereits angesprochene, relativ geringe Profilhöhe hp, welche im Wesentlichen etwa der vierfachen Materialdicke f des verwendeten Bandmaterials entspricht.

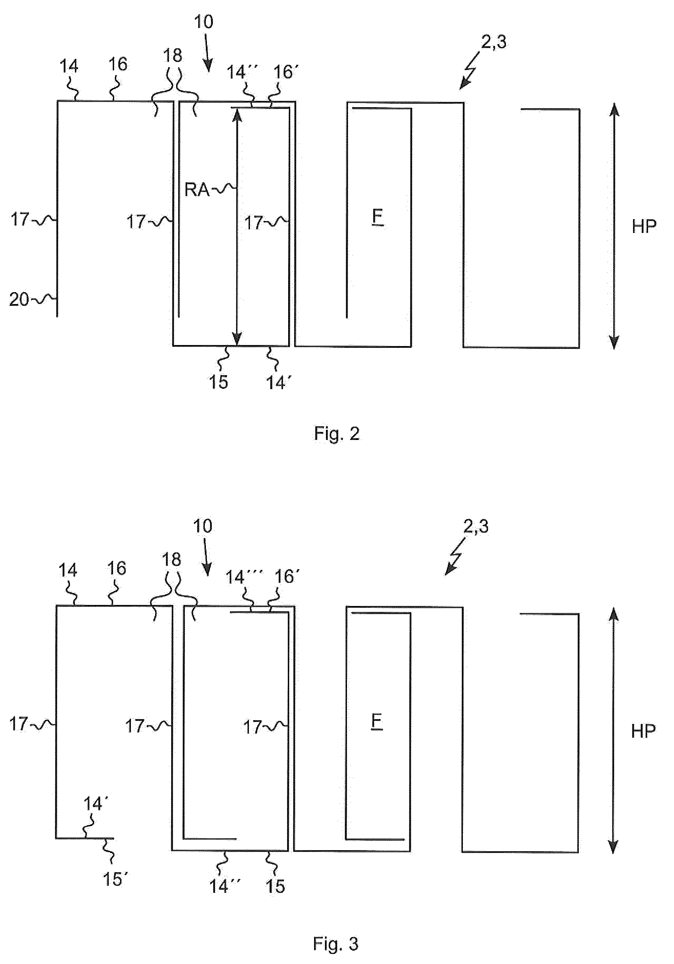

Fig. 2 zeigt ein schematisch dargestelltes Profil 10 eines als Wickelschlauch 3 ausgebildeten flexiblen Leitungselements 2 gemäß einer Ausführungsform der Erfindung. Wie hier erkennbar ist, umfasst der Wickelschlauch 3 wiederum ein mehrlagiges Profil 10, wobei jede Lage eine vorbestimmte, vorzugsweise gleiche Dicke aufweist. Das Profil 10 ist mit einem inneren axialen Abschnitt 15, zwei äußeren axialen Abschnitten 16, 16' und drei radialen Abschnitten 17 ausgebildet, welche den inneren axialen Abschnitt 15 mit den äußeren axialen Abschnitten 16, 16' in der gezeigten Weise verbinden. In diesem Zusammenhang bedeutet "axialer Abschnitt" das sich der betreffende Profilabschnitt im Wesentlichen oder vollständig in axialer Richtung des Leitungselements 2, d. h. in Richtung von dessen Längserstreckung erstreckt. In den Figuren entspricht dies einer Richtung von rechts nach links, oder umgekehrt. "Radialer Abschnitt" bedeutet, dass sich der betreffende Abschnitt in radialer Richtung bezogen auf die Längserstreckung des Leitungselements 2, d. h. quer zumindest im Wesentlichen quer zu dessen Längsrichtung erstreckt. In den Figuren ist dies die Richtung von oben nach unten, oder umgekehrt. Im Falle des Profils gemäß Figur 2 ergänzen sich die genannten drei radialen Abschnitte 17 sowie die axialen Abschnitte 15, 16, 16' zu einem im Wesentlichen S-förmigen Profilquerschnitt, wobei der freie radiale Abschnitt 17 (ganz links in Figur 2) gegenüber den beiden anderen radialen Abschnitten 17 verkürzt ausgebildet ist. Der andere endständige radiale Abschnitt 17 (rechts in Figur 2) weist an seinem Ende eine Abwinkelung auf, welche den einen (kürzeren) äußeren axialen Abschnitt 16' bildet. Dies führt dazu, dass ein äußerer axialer Abschnitt 16' der zwei äußeren axialen Abschnitte 16, 16' nur mit der etwa halben Länge des anderen äußeren axialen Abschnitts 16 ausgebildet ist. Der endständige linke radiale Abschnitt 17 verbindet keine axialen Abschnitte hintereinander, sondern weist ein freies Ende 20 auf, wie bereits erwähnt. Der kürzere axiale Abschnitt 16', der innere axiale Abschnitt 15 und zwei radiale Abschnitte 17 bilden eine offene Kammer 18 aus, in welcher ein Isoliermittel, wie beispielsweise Luft, aufnehmbar bzw. aufgenommen ist. Die Länge des kürzeren axialen Abschnitt 16' definiert denjenigen Raum innerhalb der Kammer 18, welcher auch beim Auseinanderziehen des Profils in Figur 2 (vgl. Figur 1A, Bezugszeichen A) als freier Raum erhalten bleibt, so dass die durch das Isoliermittel hervorgerufene oder begünstigte Isolierwirkung sowohl im zusammengeschobenen als auch im auseinandergezogenen Zustand des Wickelschlauchs 3 gegeben ist. Ein solcher Zustand ist weiter rechts in Figur 2 dargestellt. Hier tritt der nicht explizit bezeichnete, kürzere äußere axiale Abschnitt des Profils mit einem radialen Abschnitt des Profils in Anlage. Der dennoch verbleibende Freiraum ist mit dem Bezugszeichen F bezeichnet.

Die radiale Profilhöhe HP des Profils 10 beträgt bei der Ausführungsform gemäß Figur 2 5 mm und ist im Gegensatz zu der in den Figuren 1A und 1B dargestellten und aus dem Stand der Technik bekannten Ausführungsform in Längsrichtung des Wickelschlauchs 3 nicht flach sondern relativ hoch ausgebildet. Die radiale Profilhöhe HP ist zumindest doppelt so groß wie die Summe der Materialdicken bzw. Wandstärken der einzelnen Lagen 14, 14', 14" des Profils 10 und wird dabei im Wesentlichen durch die Länge der radialen Abschnitte 17 bzw. die radiale, lichte Abmessung RA der Kammern 18 bestimmt. Durch die Isolierung des Wickelschlauchs 3 mittels der in der offenen Kammer 18 vorhandenen Luft kann sowohl ein akustischer als auch ein thermischer Isoliereffekt erzielt werden. Auch wird hierdurch der Wärmeverlust des Wickelschlauchs 3 verringert. Der dargestellte Wickelschlauch 3 kann nach Art eines Liners verwendet werden, wobei er dann die Innenkomponente und/oder Außenkomponente für ein weiteres flexibles Leitungselement bildet, wie beispielsweise einen Metallbalg oder dergleichen. Weiterhin kann der Wickelschlauch 3als direkt abgasführendes Bauteil eingesetzt werden, insbesondere wenn keine übermäßig hohen Dichtheitsanforderungen bestehen.

Fig. 3 zeigt ein schematisch dargestelltes Profil 10 eines als Wickelschlauch 3 ausgebildeten flexiblen Leitungselements 2 gemäß einer weiteren Ausführungsform, welche sich von der in Figur 2 dargestellten Ausführungsform dadurch unterscheidet, dass auch im Bereich desjenigen radialen Abschnitts, welcher gemäß Figur 2 ein freies Ende aufwies, eine Abwinkelung vorhanden ist, welche einen weiteren inneren axialen Abschnitt 15' ausbildet. Diese Abwinkelung ist spiegelbildlich zu derjenigen Abwinkelung angeordnet, welche den äußeren axialen Abschnitt 16' ausbildet (vgl. Figur 2). Auf diese Weise ergibt sich insgesamt eine punktsymmetrische Ausgestaltung des Profils 10. Entsprechend ist der linke endständige radiale Abschnitt 17 des Profils gegenüber der Ausgestaltung in Figur 2 verlängert ausgebildet und entspricht somit bezüglich seiner Abmessungen dem rechten radialen Abschnitt 17 des Profils 10. Dies führt dazu, dass es bei der Ausgestaltung gemäß Figur 3 nunmehr zwei innere axiale Abschnitte 15, 15' gibt, wobei ein innerer axialer Abschnitt 15' nur etwa die Hälfte der Länge des anderen inneren axialen Abschnitts 15 aufweist. Somit verbindet jeder der drei radialen Abschnitte 17 jeweils einen inneren axialen Abschnitt 15, 15' mit einem äußeren axialen Abschnitt 16, 16', und es gibt kein freies Ende 20, wie in der in Figur 2 dargestellten Ausführungsform. Diese Ausgestaltung führt dazu, dass im auseinandergezogenen Zustand des Wickelschlauchs, wie er weiter rechts in Figur 3 dargestellt ist, die verbleibende Kammer 18 bzw. der darin definierte Freiraum F in radialer Richtung sowohl innen als auch außen über die kürzeren axialen Abschnitte 15', 16' definiert begrenzt ist. Dabei sorgt die mögliche Abstützung der genannten axialen Abschnitte 15', 16' an den benachbarten radialen Abschnitten für eine verbesserte mechanische Stabilisierung des Profils. Durch erhöhte Reibungsverluste nimmt auch die Dämpfungswirkung des Wickelschlauchs 3 gemäß Figur 3 gegenüber dem Wickelschlauch 3 aus Figur 2 zu.

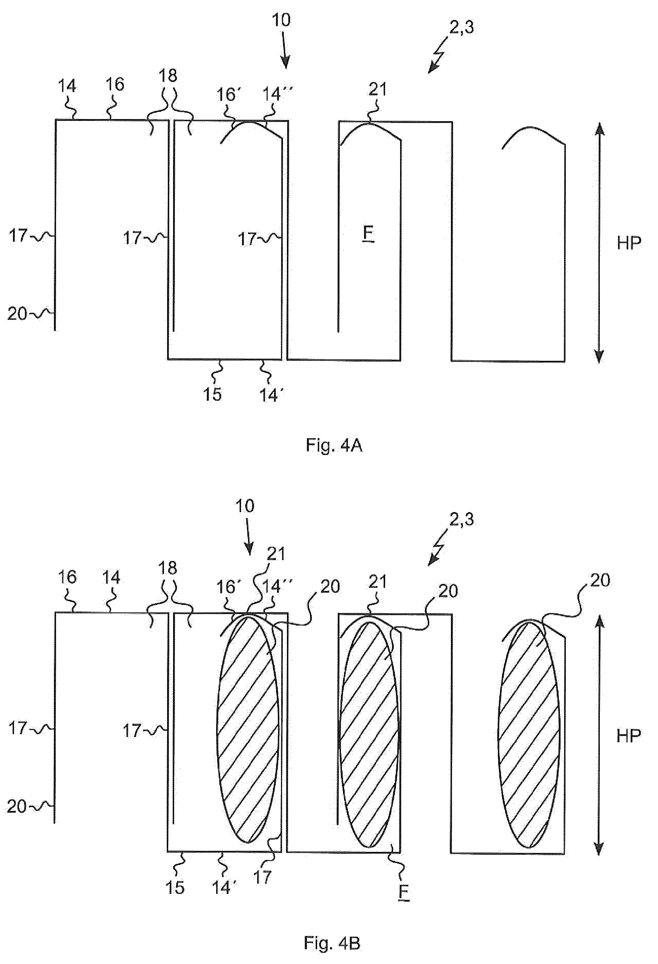

Fig. 4A und Fig. 4B zeigen ebenfalls ein schematisch dargestelltes Profil 10 eines Wickelschlauchs 3 gemäß einer weiteren Ausführungsform, wobei die in Figur 4A gezeigte Darstellung den Wickelschlauch 3 ohne zusätzliches Isoliermittel bzw. nur mit Luft als Isoliermittel in den Kammern 18 zeigt. Bei der in Figur 4B gezeigten Darstellung des Wickelschlauchs 3 ist ein zusätzliches Isoliermittel 20 vorhanden, welches in den Kammern 18 angeordnet ist. Das Isoliermittel 20 kann beispielsweise ein Glasfasermaterial sein. Die hier dargestellte Ausführungsform unterscheidet sich von der in Figur 2 dargestellten Ausführungsform dadurch, dass diejenigen äußeren axialen Abschnitte 16', welche nur die halbe Länge aufweisen, jeweils mit einer zur Kammer 18 konkaven Wölbung 21 versehen sind. Die Wölbung 21 dient einerseits dazu, die innere Reibung in dem Wickelschlauch 3 zu erhöhen, wenn sich der axiale Abschnitt 16' im Bereich der Wölbung an den weiter außen angeordneten axialen Profilabschnitt entlang bewegt. Zum anderen dient die Wölbung 21 in der dargestellten Weise zum Lokalisieren bzw. Fixieren des Isoliermittels 20. Selbstverständlich ist es auch möglich, anstelle des freien Endes 20 auch in diesem Bereich eine zur Kammer 18 hin konkave Wölbung 21 vorzusehen. Dies entspricht einer Abwandlung der Ausgestaltung gemäß Figur 3, wenn im Bereich des dortigen axialen Abschnitts 15' ebenfalls eine der Wölbung 21 entsprechende Wölbung vorgesehen wird. Eine solche zusätzliche Wölbung führt auch zu einer weiteren Verbesserung der Dämpfungswirkung durch zusätzliche Reibung.

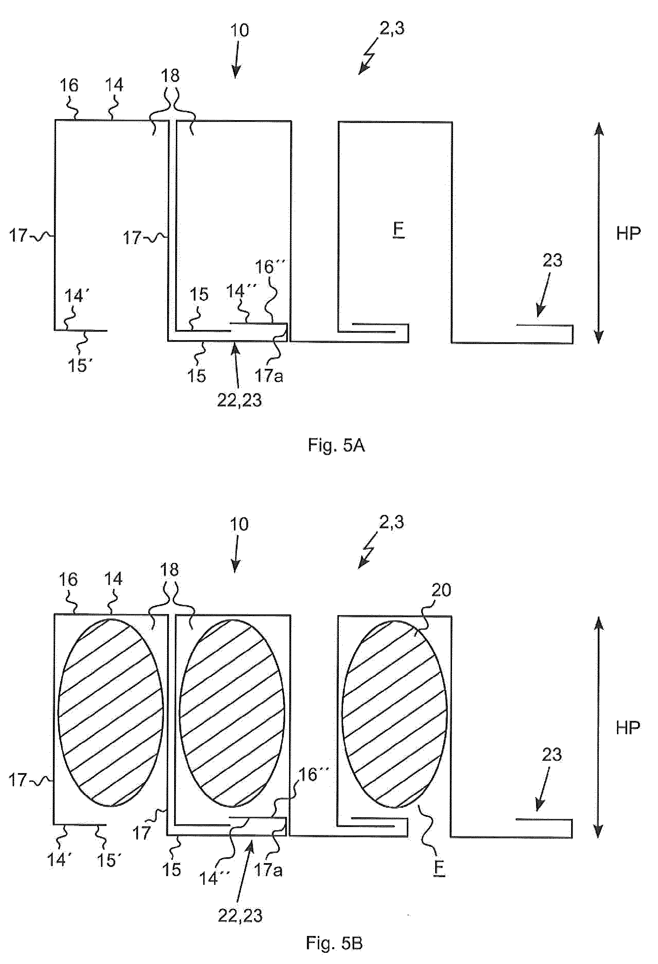

Fig. 5A und Fig. 5B zeigen ebenfalls ein schematisch dargestelltes Profil 10 eines Wickelschlauchs 3 gemäß noch einer weiteren Ausführungsform, wobei die in Figur 5A gezeigte Darstellung den Wickelschlauch 3 ohne zusätzliches Isoliermittel bzw. nur mit Luft als Isoliermittel in den Kammern 18 zeigt und die in Figur 5B gezeigte Darstellung den Wickelschlauch 3 mit einem zusätzlichen Isoliermittel 20 (z. B. Glasfasermaterial) zeigt, welches in den Kammern 18 angeordnet ist. Die hier dargestellte Ausführungsform unterscheidet sich von den anderen Ausführungsformen dadurch, dass hier nur ein äußerer axialer Abschnitt 16 und zwei innere axiale Abschnitte 15, 15' vorgesehen sind, von denen ein innerer axialer Abschnitt 15' nur die halbe Länge des anderen aufweist (vgl. Figur 3). Darüber hinaus sind anstelle von drei radialen Abschnitten 17 nur zwei radiale Abschnitte 17 vorgesehen, da das Ende 22 des inneren axialen Abschnitts 15,welcher die volle Länge aufweist, nicht mit einem weiteren radialen Abschnitt 17 verbunden ist, sondern einen Haken 23 ausbildet, welcher einen inneren axialen Abschnitt 15' mit der halben Länge in Eingriff nehmen kann. Der zuletzt genannte Eingriffszustand ist etwa im mittleren Bereich von Figur 5B explizit dargestellt. Alternativ lässt sich die Ausführungsform gemäß Figur 5B auch beschreiben, indem man angibt, dass abweichend von der Ausführungsform beispielsweise in Figur 3 der rechte radiale Abschnitt 17 stark verkürzt ausgebildet ist. Der stark verkürzte radiale Abschnitt in Figur 5b mit dem Bezugszeichen 17a versehen, erstreckt sich demgemäß nicht in den radialen Außenbereich der Kammer 18, sondern nur soweit in radialer Richtung nach außen, dass der mit dem Bezugszeichen 16" bezeichnete axiale Abschnitt, welcher dann gemäß der vorliegenden Konvention keinen äußeren axialen Abschnitt sondern eher einen inneren axialen Abschnitt darstellt, den kürzeren inneren axialen Abschnitt 15' in radialer Richtung übergreifen kann, wie dies im rechten Teil der Abbildung in Figur 5B gezeigt ist. Das Übergreifen sorgt dafür, dass auch im auseinandergezogenen Zustand des Wickelschlauchs 3 ein definierter, ausreichender Freiraum F für das Isoliermittel verbleibt.

### Bezugzeichen

- 2: flexibles Leitungselement
- 3: Wickelschlauch
- 10: Profil
- 11: Agraffe
- 12: Haken
- 13: Kante
- 14, 14', 14", 14'": Lage
- 15, 15': innerer axialer Abschnitt
- 16, 16': äußerer axialer Abschnitt
- 16": axialer Abschnitt
- 17: radialer Abschnitt
- 17a: radialer Abschnitt
- 18: Kammer
- 20: freies Ende
- 21: Wölbung
- 22: Ende des inneren axialen Abschnitts
- 23: Haken
- hp: Profilhöhe (flach)
- HP: Profilhöhe (hoch)
- s: Materialdicke
- F: Freiraum
- A, B: Bereich

## Patentansprüche

1. Flexibles Leitungselement (2) in Form eines Wickelschlauchs (3) zur Verwendung in einer Abgasanlage eines Kraftfahrzeugs, welches ein mehrlagiges Profil (10) aufweist, wobei jede Lage (14, 14', 14", 14"') des Profils (10) jeweils eine vorbestimmte Materialdicke (s) aufweist, wobei das Profil (10) zumindest einen inneren axialen Abschnitt (15, 15'), zumindest einen äußeren axialen Abschnitt (16, 16'), der den inneren axialen Abschnitt (15) zumindest teilweise überlappt, und zumindest einen den inneren axialen Abschnitt (15, 15') und den äußeren axialen Abschnitt (16, 16') verbindenden radialen Abschnitt (17) aufweist, wobei der äußere axiale Abschnitt (16), der radiale Abschnitt (17), der innere axiale Abschnitt (15) und ein sich anschließender weiterer radialer Abschnitt (17) eine Kammer (18) bilden, deren radiale lichte Abmessung (RA) im Wesentlichen eine radiale Profilhöhe (HP) des Profils (10) bestimmt, welche radiale Profilhöhe (HP) zumindest doppelt so groß ist wie die Summe der jeweiligen vorbestimmten Materialdicken (s) der Lagen (14, 14', 14", 14"') des Profils (10)
**dadurch gekennzeichnet, dass**
die radialen Abschnitte (17) der Kammer (18) länger sind als der jeweilige innere axiale und äußere axiale Abschnitt (15, 16).

2. Flexibles Leitungselement (2) gemäß Anspruch 1,
**dadurch gekennzeichnet, dass** die radiale Profilhöhe (HP) zumindest 5 mm beträgt.

3. Flexibles Leitungselement (2) gemäß Anspruch 1 oder 2,
**dadurch gekennzeichnet, dass** im Inneren des Profils (10), insbesondere im Inneren der Kammern (18), ein Isoliermittel (20) vorgesehen ist.

4. Flexibles Leitungselement (2) gemäß Anspruch 3,
**dadurch gekennzeichnet, dass** das Isoliermittel (20) ein poröses, vorzugsweise nicht verformbares Material ist.

5. Flexibles Leitungselement (2) gemäß Anspruch 3 oder 4,
**dadurch gekennzeichnet,**
**dass** das Isoliermittel (20) ein für Abgasanwendungen ausreichend hitzebeständiges Material ist.

6. Flexibles Leitungselement (2) gemäß Anspruch 3 bis 5,
**dadurch gekennzeichnet, dass** das Isoliermittel (20) Glasfasermaterial, insbesondere ein Glasfasergestrick, umfasst.

7. Flexibles Leitungselement (2) gemäß Anspruch 3,
**dadurch gekennzeichnet, dass** das Isoliermittel (20) durch Luft gebildet wird.

8. Flexibles Leitungselement (2) gemäß einem der Ansprüche 1 bis 7,
**dadurch gekennzeichnet, dass** das Profil (10) aus einem metallischen Material gebildet ist, vorzugsweise Stahl.

9. Flexibles Leitungselement (2) gemäß einem der Ansprüche 1 bis 8,
**dadurch gekennzeichnet,**
**dass** das Profilmaterial mit einem definierten Lochmuster versehen ist.

10. Flexibles Leitungselement (2) gemäß einem der Ansprüche 1 bis 9,
**dadurch gekennzeichnet, dass** das flexible Leitungselement (2) als Innenkomponente oder Außenkomponente eines weiteren flexiblen Leitungselements, insbesondere eines Metallbalgs (4), verwendbar ist.

11. Flexibles Leitungselement (2) gemäß einem der Ansprüche 1 bis 10,
**dadurch gekennzeichnet, dass** das flexible Leitungselement (2) als direkt abgasführendes Bauteil verwendbar ist.

12. Flexibles Leitungselement gemäß einem der Ansprüche 1 bis 11,
**dadurch gekennzeichnet,**
**dass** ein radial äußerer axialer Abschnitt (16') und/oder ein radial innerer axialer Abschnitt des Profils (10) gekrümmt ausgebildet ist, vorzugsweise bezüglich der Kammer (18) konkav gekrümmt.

13. Flexibles Leitungselement (2) gemäß einem der Ansprüche 1 bis 12, **dadurch gekennzeichnet,**
**dass** axial aufeinander folgende innere und äußere axiale Abschnitte (15', 16; 15, 16') axial unterschiedlich lang ausgebildet ist.

14. Flexibles Leitungselement (2) gemäß einem der Ansprüche 1 bis 13,
**dadurch gekennzeichnet,**
**dass** axial aufeinander folgende radiale Abschnitte im Wesentlichen gleich lang (17) und/oder mit deutlich unterschiedlicher Länge (17, 17a) ausgebildet sind.

## Claims

1. Flexible duct element (2) in the form of a stripwound hose (3) for use in an exhaust gas system of a motor vehicle, which duct element has a multi-layered profile (10), each layer (14, 14', 14", 14"') of the profile (10) having a predetermined material thickness (s), wherein the profile (10) has at least one inner axial portion (15, 15'), at least one outer axial portion (16, 16'), which at least partly overlaps the inner axial portion (15), and at least one radial portion (17) which connects the inner axial portion (15, 15') and the outer axial portion (16, 16'), wherein the outer axial portion (16), the radial portion (17), the inner axial portion (15) and an adjoining further radial portion (17) form a chamber (18) the radial internal dimension (RA) of which substantially determines a radial profile height (HP) of the profile (10), which radial profile height (HP) is at least twice as great as the sum of the respective predetermined material thicknesses (s) of the layers (14, 14', 14", 14"') of the profile (10),
**characterised in that**
the radial portions (17) of the chamber (18) are longer than the respective inner axial and outer axial portions (15, 16).

2. Flexible duct element (2) according to claim 1,
**characterised in that**
the radial profile height (HP) is at least 5 mm.

3. Flexible duct element (2) according to claim 1 or 2,
**characterised in that**
an insulating means (20) is provided in the interior of the profile (10), especially in the interior of the chambers (18).

4. Flexible duct element (2) according to claim 3,
**characterised in that**
the insulating means (20) is a porous, preferably non-deformable material.

5. Flexible duct element (2) according to claim 3 or 4,
**characterised in that**
the insulating means (20) is a material having sufficient heat-resistance for exhaust gas applications.

6. Flexible duct element (2) according to claim 3 to 5,
**characterised in that**
the insulating means (20) comprises glass fibre material, especially a knitted glass fibre material.

7. Flexible duct element (2) according to claim 3,
**characterised in that**
the insulating material (20) is formed by air.

8. Flexible duct element (2) according to any one of claims 1 to 7,
**characterised in that**
the profile (10) is formed from a metallic material, preferably steel.

9. Flexible duct element (2) according to any one of claims 1 to 8,
**characterised in that**
the profile material is provided with a defined hole pattern.

10. Flexible duct element (2) according to any one of claims 1 to 9,
**characterised in that**
the flexible duct element (2) can be used as an internal component or external component of a further flexible duct element, especially a metal bellows (4).

11. Flexible duct element (2) according to any one of claims 1 to 10,
**characterised in that**
the flexible duct element (2) can be used as a component that directly conducts exhaust gas.

12. Flexible duct element (2) according to any one of claims 1 to 11,
**characterised in that**
a radially outer axial portion (16') and/or a radially inner axial portion of the profile (10) is of curved construction, preferably curved concavely with respect to the chamber (18).

13. Flexible duct element (2) according to any one of claims 1 to 12, **characterised in that**
axially successive inner and outer axial portions (15', 16; 15, 16') are of different axial lengths.

14. Flexible duct element (2) according to any one of claims 1 to 13, **characterised in that**
axially successive radial portions are of substantially the same length (17) and/or of significantly different lengths (17, 17a).

## Revendications

1. Elément (2) de conduite flexible sous la forme d'un flexible (3) à ondes hélicoïdales à utiliser dans un système d'échappement d'un véhicule automobile, qui présente un profilé (10) à plusieurs couches, sachant que chaque couche (14, 14', 14", 14"') du profilé (10) présente respectivement une épaisseur de matériau (s) prédéterminée, sachant que le profilé (10) présente au moins une partie axiale intérieure (15, 15'), au moins une partie axiale extérieure (16, 16') qui recouvre au moins partiellement la partie axiale intérieure (15), et au moins une partie radiale (17) reliant la partie axiale intérieure (15, 15') et la partie axiale extérieure (16, 16'), sachant que la partie axiale extérieure (16), la partie radiale (17), la partie axiale intérieure (15) et une autre partie radiale (17) s'y raccordant, forment une chambre (18) dont la dimension radiale libre (RA) détermine pour l'essentiel une hauteur radiale de profilé (HP) du profilé (10), laquelle hauteur radiale de profilé (HP) est égale au moins au double de la somme des épaisseurs de matériau prédéterminées respectives (s) des couches (14, 14', 14", 14"') du profilé (10),
**caractérisé en ce que** les parties radiales (17) de la chambre (18) sont plus longues que la partie axiale intérieure (15) et la partie axiale extérieure (16) respectives.

2. Elément (2) de conduite flexible selon la revendication 1, **caractérisé en ce que** la hauteur radiale de profilé (HP) est au moins égale à 5 mm.

3. Elément (2) de conduite flexible selon la revendication 1 ou 2, **caractérisé en ce qu'**un moyen isolant (20) est prévu à l'intérieur du profilé (10), en particulier à l'intérieur des chambres (18).

4. Elément (2) de conduite flexible selon la revendication 3, **caractérisé en ce que** le moyen isolant (20) est un matériau poreux, de préférence non déformable.

5. Elément (2) de conduite flexible selon la revendication 3 ou 4, **caractérisé en ce que** le moyen isolant (20) est un matériau résistant suffisamment à la chaleur pour des applications de gaz d'échappement.

6. Elément (2) de conduite flexible selon les revendications 3 à 5, **caractérisé en ce que** le moyen isolant (20) comprend un matériau à base de fibres de verre, en particulier un tricot de fibres de verre.

7. Elément (2) de conduite flexible selon la revendication 3, **caractérisé en ce que** le moyen isolant (20) est formé par de l'air.

8. Elément (2) de conduite flexible selon l'une des revendications 1 à 7, **caractérisé en ce que** le profilé (10) est formé d'un matériau métallique, de préférence d'acier.

9. Elément (2) de conduite flexible selon l'une des revendications 1 à 8, **caractérisé en ce que** le matériau du profilé est doté d'une trame définie de trous.

10. Elément (2) de conduite flexible selon l'une des revendications 1 à 9, **caractérisé en ce que** l'élément (2) de conduite flexible peut être utilisé comme composant intérieur ou comme composant extérieur d'un autre élément de conduite flexible, en particulier d'un soufflet métallique (4).

11. Elément (2) de conduite flexible selon l'une des revendications 1 à 10, **caractérisé en ce que** l'élément (2) de conduite flexible peut être utilisé comme élément structurel conduisant directement les gaz d'échappement.

12. Elément de conduite flexible selon l'une des revendications 1 à 11, **caractérisé en ce qu'**une partie axiale radialement extérieure (16') et/ou une partie axiale radialement intérieure du profilé (10) est réalisée courbe, de préférence à courbure concave par rapport à la chambre (18).

13. Elément (2) de conduite flexible selon l'une des revendications 1 à 12, **caractérisé en ce que** des parties axiales intérieures et extérieures axialement successives (15', 16; 15, 16') sont réalisées avec des longueurs axiales différentes.

14. Elément (2) de conduite flexible selon l'une des revendications 1 à 13, **caractérisé en ce que** des parties radiales axialement successives sont réalisées sensiblement de même longueur (17) et/ou avec des longueurs nettement différentes (17, 17a).
